# EUROPEAN PATENT APPLICATION

(11) **EP 1 394 712 A1**
(43) Date of publication of application: **03.03.2004**
(21) Application number: 02778900.7
(22) Date of filing: 10.05.2002
(51) Int. Cl.: G06F 17/60, A63F 13/00

(54) **POINT SERVICE SYSTEM**

(30) Priority: 07.06.2001 JP 2001172286
(71) Applicant: Sony Computer Entertainment Inc., Tokyo 107-0052 (JP)
(72) Inventor: KAGEYAMA, Hitoshi, PlayStation.com (Japan) Inc., Tokyo 107-0052 (JP); KUWAHARA, Toru, PlayStation.com (Japan) Inc., Tokyo 107-0052 (JP); KISHI, Koji, PlayStation.com (Japan) Inc., Tokyo 107-0052 (JP); IIDA, Tetsuya, PlayStation.com (Japan) Inc., Tokyo 107-0052 (JP)
(74) Representative: Turner, James Arthur
(86) International application number: PCT/JP2002/004544
(87) International publication number: WO 2002/101613

(57) **Abstract**

A store apparatus determines a number of points given to a customer who has purchased commodity from a customer apparatus via the Internet, in which the number of points are determined based on a number indicated by a roulette. This makes possible to keep purchase willingness of the customer and to direct the purchase willingness of the customer to all commodities. In addition, since the customer may be able to acquire higher point than the point given usually depending on a result of the roulette, it is possible to rouse the purchase of the customer, and as an additional plus, the customer is capable of shopping with more fun.

## Description

### TECHNICAL FIELD

The present invention relates to a point service system, a method of point service, a point service program and a computer readable recording medium having recorded therein point service program, in which exchangeable points for various kinds of commodities or services are given to customers depending on the customers' order of the commodity or the service.

### BACKGROUND ART

Conventionally, many point service systems have been provided in which points exchangeable for various kinds of services such as discount of commodity, premium exchange or so forth are given to the customers depending on a price of commodity that the customers purchased at a store. According to the systems, by giving points to the customers, the point service system is capable of rousing the customers to purchase, so that the system has been introduced not only in real stores, but also in virtual stores expanded on the Internet, namely network marketing systems.

Meanwhile, in these days, in order to further rouse the customers to purchase commodities by utilizing the point service system, improvement is made in which larger points are given to the customers than general points, when customers purchase a commodity within a specific period or customers purchases a commodity with combining a specific campaigned commodity.

According to the improvement described above, however,
only the specific period or the specific campaigned commodity rouse customers to purchase commodities, therefore there is difficulty continuing the customers' willingness for purchasing commodity and directing their attention to commodities other than the campaigned commodity.

On the other hand, in the above-described conventional point service system, the number of point given to customers is predetermined at the store side, therefore, on the occasion that the number of point is determined, there is entirely no room for intervention of a will of customers, accordingly, above-described conventional point service system does not interest customers exceedihgly except for only service brought by the points.

The present invention was proposed in consideration of the above-mentioned problems, and an object of the present invention is to provide a point service system, a method for point service, a point service program and a computer readable recording medium having recorded therein point service program all of which enables rousing willingness for purchasing commodity of customers toward the whole commodities and/or the service, continuing the willingness for purchasing, and bringing enjoyable purchase to customers.

### DISCLOSURE OF THE INVENTION

In the present invention, the number of point given to the customers who purchase commodities and/or services is changed in accordance with game-based factor. According to the constitution, value of the point given to the customers is changed irrespective of purchase amount of commodities and the customers themselves can determine value of the point with a sense of game, therefore, this point service makes it possible to maintain customers' willingness for purchasing commodities and to direct the customers' purchase willingness to all commodities irrespective of the specific time period and specific commodity. In addition, since pleasure of determining the number of point is prepared for the customers, the customers are capable of shopping with more fun.

### BRIEF DESCRIPTION OF THE DRAWINGS

FIG.1 is a schematic view illustrating an entire configuration of a network marketing system according to one embodiment of the present invention;
FIG.2 is a schematic view illustrating constitution of a store apparatus involved in the network marketing system illustrated in FIG.1;
FIG.3 is a schematic view illustrating data format involved in commodity database according to the embodiment of the present invention;
FIG.4 is a schematic view illustrating data format involved in customer database according to the embodiment of the present invention;
FIG.5 is a schematic view illustrating customer apparatus involved in the network marketing system illustrated in FIG.1;
FIG.6 is a flowchart illustrating operation of the network marketing system;
FIG.7 is a flowchart illustrating ID registration process according to the embodiment of the present invention;
FIG.8 is a flowchart illustrating order process according to the embodiment of the present invention;
FIG.9 is a schematic view illustrating roulette participation confirmation image according to the embodiment of the present invention;
FIG.10 is a schematic view illustrating roulette operation image according to the embodiment of the present invention;
FIG.11 is a schematic view for explaining point giving process according to the embodiment of the present invention; and
FIG.12 is a schematic view illustrating point checking image according to the embodiment of the present invention.

### BEST MODE FOR CARRYING OUT THE INVENTION

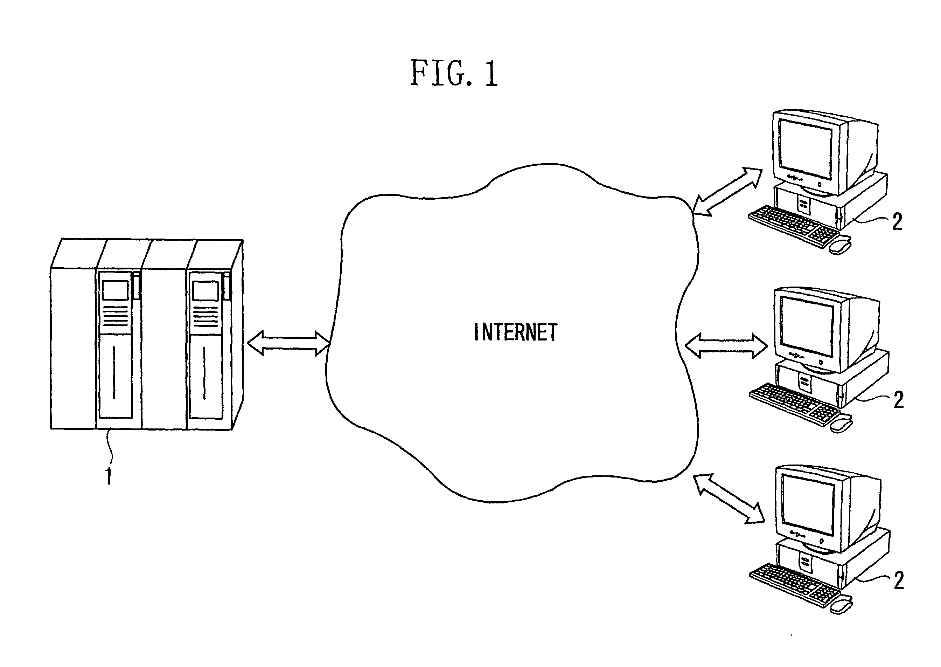

The present invention, for example, as illustrated in FIG.1, is applicable to a network marketing system in which a customer purchases commodity via the Internet.

### Configuration of Network Marketing System

First of all, configuration of the network marketing system according to an embodiment of the present invention will be explained referring to FIG.1.

The network marketing system according to the embodiment of the present invention is illustrated in FIG.1, in which a store apparatus 1 and customer apparatus 2 are connected to each other via predetermined network such as, for example, the Internet or the like.

The store which controls the store apparatus 1 has established an online shopping mall on the Internet. The online shopping mall may sell not only commodities manufactured by the store itself but also other commodities.

A customer who is a user of the customer apparatus 2 is capable of accessing the online shopping mall established by the store apparatus 1 via the Internet and then ordering commodities that the customer desires to purchase. In order to make the processing smooth at this time, the store apparatus 1 can oblige the customer to input information such as, address for delivery, necessary information for payment and so forth before the customer's utilization of the online shopping mall. The store which has received an order at the store apparatus 1 conducts procedure for delivering ordered commodity to the customer. In addition, the order includes an advance order.

In order to keep the customer's willingness for purchasing commodities, and to direct the customer's purchase willingness to all commodities that the store deals with, the online shopping mall makes the customer rotate a virtual roulette and then gives points depending on a numeral indicated by the roulette after shipping the commodity to the customer. The point is capable of being converted into, for example, 1 yen per 1 point in the online shopping mall, so as to be used by the customer in order to obtain a discount service depending on the number of the point at the next time of purchasing, or in order to exchange to premium commodity with the predetermined number of points.

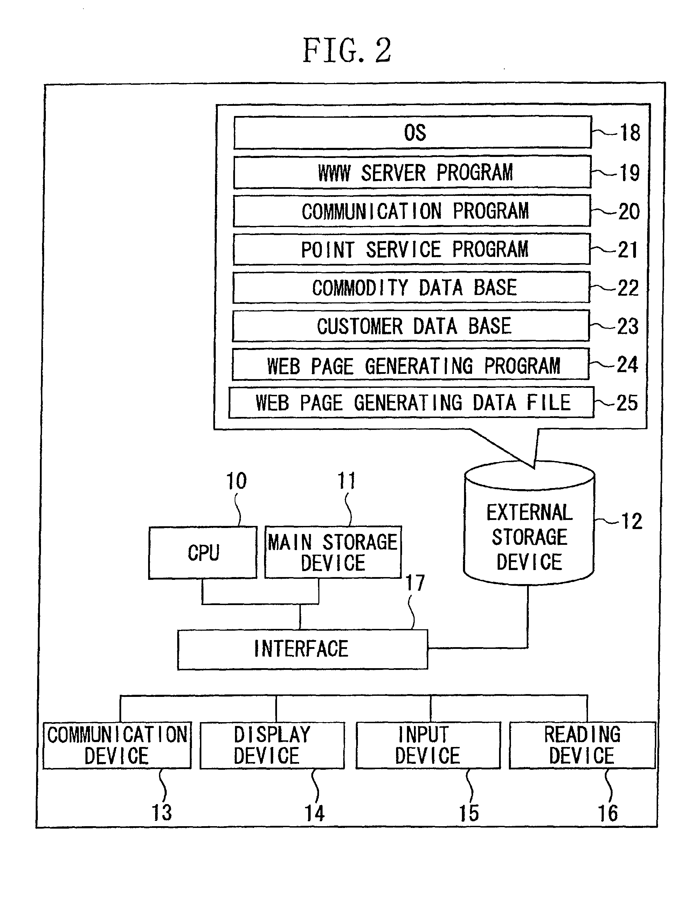

Constitution of the store apparatus 1 will be described next referring to FIG.2.

The store apparatus 1, as illustrated in FIG.2, reads out data from a CPU 10 (Central Processing Unit; CPU), a main storage device 11, an external storage device 12 such as hard disk device and so forth, a communication device 13 for conducting communication to the customer apparatus 2 via the Internet, a display device 14 such as display and so forth, an input device 15 such as keyboard, mouse and so forth, a recording medium having portability such as CD-ROM, DVD-ROM and so forth.

The external storage device 12 stores therein an OS 18 (OS; Operation System), WWW server program 19, a communication program 20, a point service program 21, a commodity database 22, a customer database 23, a Web page generating program 24, and a Web page generating data file 25 and the respective programs are loaded on the main storage device 11 and executed by the CPU 10.

The WWW server program 19 is executed by the CPU 10, thereby controlling the store apparatus 1 so as to show data in the form of HTML (Hyper Text Markup Language) so that the customer can peruse the data from the WWW browser of the customer apparatus 2 by utilizing HTTP (Hyper Text Transfer Protocol).

The communication program 20 is executed by the CPU 10, thereby controlling the store apparatus 1 so as to process various kind of protocols such as, for example, PPP (Point-to-Point Protocol) and/or TCP/IP (Transmission Control Protocol/Internet Protocol) and so forth necessary to conduct communication between the store apparatus 1 and the customer apparatus 2.

The point service program 21 is executed by the CPU 10, thereby controlling the store apparatus 1 so as to determine point to be given to the customer in accordance with a numeral indicated by the virtual roulette which the customer rotates after shipment of the purchased commodity to the customer.

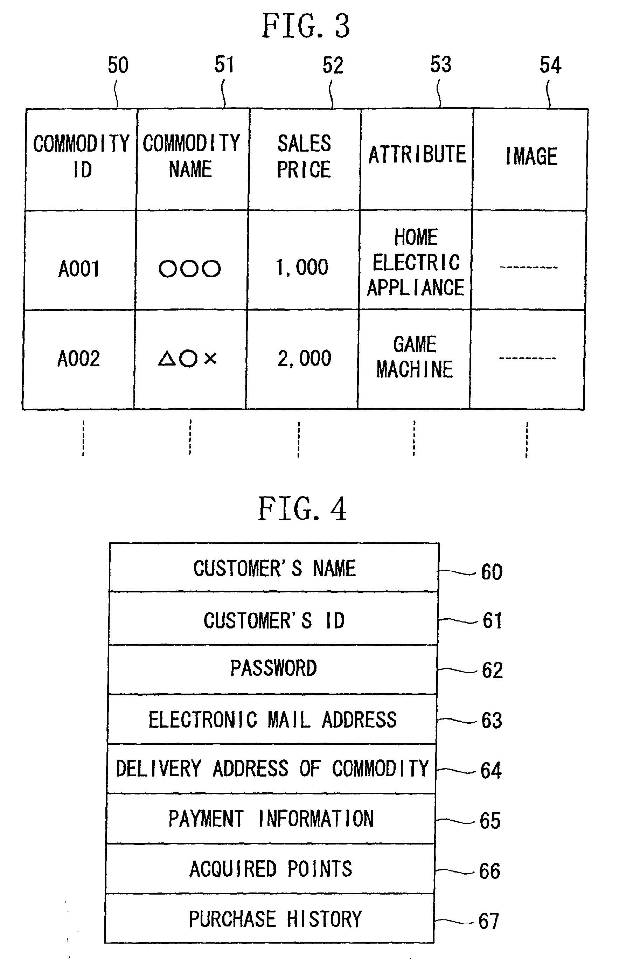

The commodity database 22, as illustrated in FIG. 3, stores therein commodity ID 50 which is code for identifying the commodities, commodity name 51, sales price 52, attribute of commodity 53 classified into, for example, "home electric appliance", "game machine", "software" and so forth and image 54 for generating image of the commodity, in a state of being associated mutually.

The customer database 23, as illustrated in FIG.4, stores therein customer's name 60, customer ID 61, password 62, electronic mail address 63, delivery address of commodity 64, payment information 65 necessary for payment such as information of credit card and so forth, the number of acquired point 66 acquired by the customer, and purchase history 67 recording purchased commodity and purchased date, in a state of being associated mutually.

The Web page generating program 24 is executed by the CPU 10, thereby controlling the store apparatus 1 so as to generate HTML form-based Web page and so forth on which sales commodity is appeared referring to the commodity database 22, and the Web page generating data file 25 and so forth.

The Web page generating data file 25 stores therein page file, and template file and so forth in order to generate Web page.

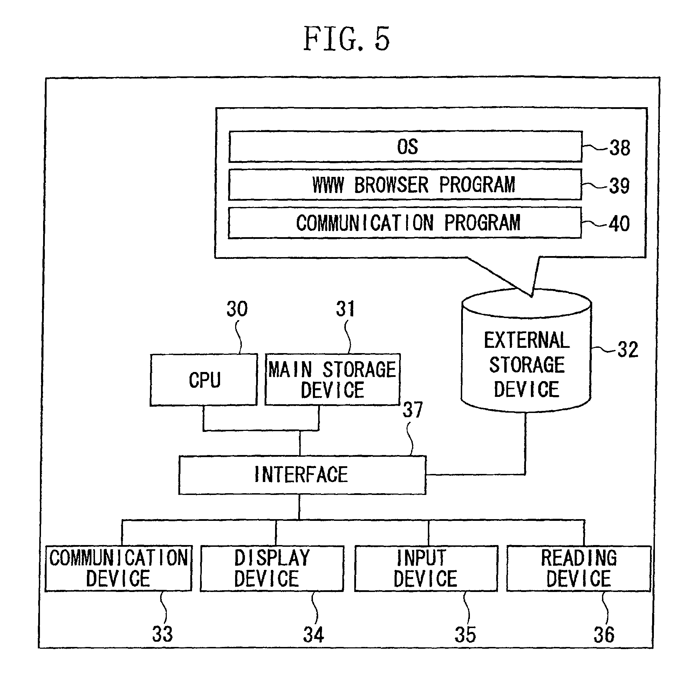

Next, constitution of the customer apparatus 2 will be described referring to FIG.5.

The customer apparatus 2, as illustrated in FIG.5, comprises a CPU 30, a main storage device 31, an external storage device 32 such as a hard disk device and so forth, a communication device 33 for conducting communication to the store apparatus 1 via a predetermined network such as, for example, the Internet and so forth, a display device 34 such as a display and so forth, an input device 35 such as a keyboard, mouse and so forth, a reading device 36 for reading data from a recording medium having portability such as CD-ROM, DVD-ROM and so forth, and an interface 37 for controlling data transmission between the above-described constitution elements.

The external storage device 32 stores therein an OS 38, WWW browser program 39 and communication program 40, and the respective programs are loaded on the main storage device 31 and executed by the CPU 30.

The WWW browser program 39 is executed by the CPU 30, thereby controlling the customer apparatus 2 so that the customer can peruse HTML form-based data such as Web page and so forth which the store apparatus 1 opens to the public, by utilizing the HTTP.

The communication program 40 is executed by the CPU 30, thereby controlling the customer apparatus 2 so as to process various kinds of protocols necessary to communicate with the store apparatus 1.

### Operation of Network Marketing System

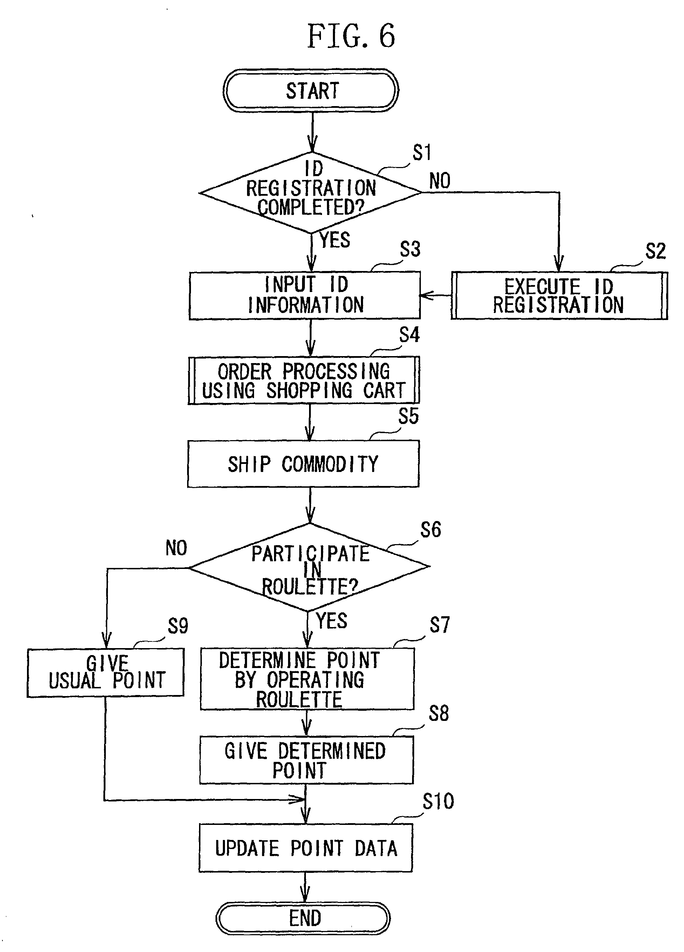

Operations for the case where the customer purchases commodities from the online shopping mall provided by the store apparatus 1 via the customer apparatus 2 will be explained referring to the flowchart illustrated in FIG.6.

In this flowchart illustrated in FIG.6, the flow starts when the customer connects the customer apparatus 2 with the store apparatus 1 via the Internet by operating the customer apparatus 2 and the customer peruses the Web page that the store apparatus 1 has opened to the public on the display device 34 of the customer apparatus 2, then this commodity purchase processing shifts to step S1.

In the processing of step S1, whether the customer completes ID registration on the online shopping mall provided by the store apparatus 1 is checked. For the case that the customer has not completed the ID registration yet, this commodity purchase processing shifts to ID registration processing of step S2.

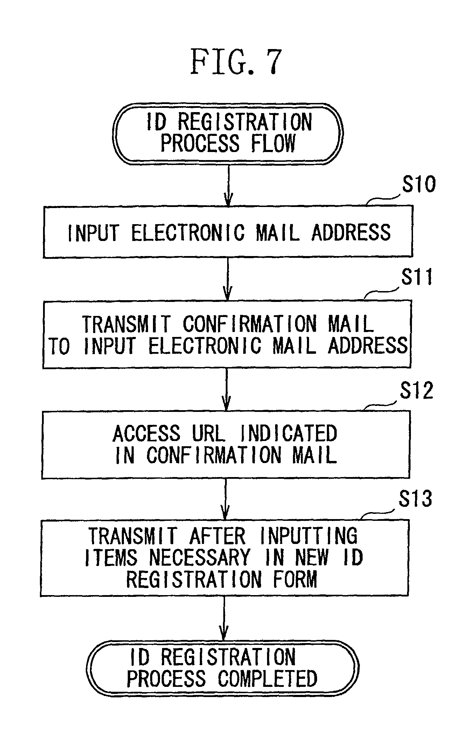

ID registration processing of step S2 is executed in accordance with the flowchart illustrated in FIG.7. Hereinafter, the processing of step S2 will be explained referring to FIG.7.

Flowchart illustrated in this FIG.7 starts when the customer clicks on a new registration button provided within the Web page, then this ID registration processing shifts to processing of step S11.

In step S11, the customer inputs an electronic mail address while operating the input device 35 of the customer apparatus 2. After completion of the input of the electronic mail address, the customer apparatus 2 transmits the electronic mail address to the store apparatus 1 by controlling the communication device 33, where the processing of this step S11 is completed, then this ID registration processing shifts to processing of step S12.

In step S12, the store apparatus 1 transmits a confirmation mail that notifies a URL (Universal Resource Locator) for new registration to the electronic mail address input by the customer. This processing can determine whether the input electronic mail address is not valid or not correct. The ID registration processing then shifts from step S12 to step S13,

In step S13, the customer receives the confirmation mail transmitted from the store apparatus 1 via the customer apparatus 2, and accesses the URL in order to complete the new registration referring to the confirmation mail so as to output a new ID registration form on the display device 34 of the customer apparatus 2. This completes the processing of this step S13, at which point the ID registration processing shifts to step S14.

In step S14, the customer inputs items (name, password, delivery address of commodity, information necessary for payment such as information of credit card and so forth) necessary to register an ID by referring to the output new ID registration form. After completion of the input of items necessary for ID registration, the customer apparatus 2 controls the communication device 33 to transmit information input by the customer to the store apparatus 1. When receiving the items necessary for the ID registration from the customer apparatus 2, the store apparatus 1 stores the received information in the customer database 23, then transmits customer's ID and password to the electronic mail address of the customer. This completes a series of ID registration processing, at which point the processing shifts to step S3 illustrated in FIG. 6, which is the main routine.

On the other hand, for the case that the customer has already completed the ID registration to the online shopping mall, this commodity purchase processing immediately shifts to step S3.

In step S3, the customer inputs the customer's ID and password that are transmitted from the store apparatus 1 by operating the input device 35 of the customer apparatus 2. When the customer's ID and the password are input, the customer apparatus 2 transmits the customer's ID and password input by the customer to the store apparatus 1 by controlling the communication apparatus 33 of the customer apparatus 2. The store apparatus 1, when receiving the customer's ID and password from the customer apparatus 2, judges whether the customer's ID and password input by the customer are correct or not by referring to the customer database 23, and then, in the case that the customer's ID and password are correct, this commodity purchase processing shifts to order processing of step S4. On the other hand, for the case that the customer's ID and password are not correct, an error massage is transmitted to the customer apparatus 2 in order to prohibit the commodity purchase processing.

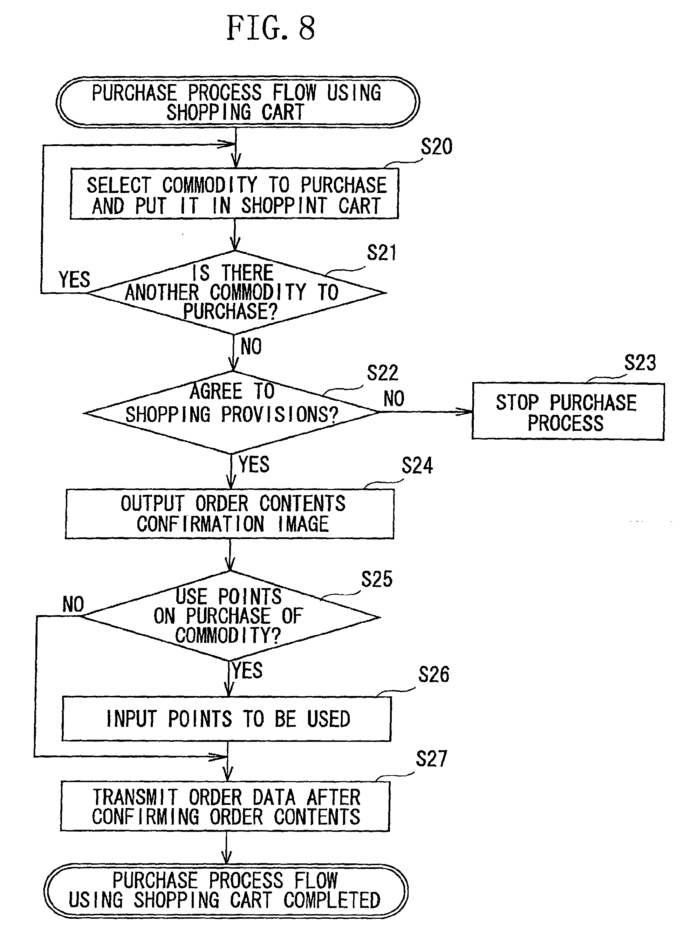

The order processing of step S4 is executed in accordance with flowchart illustrated in FIG.8. Hereinafter, procedure about the order processing of step S4 will be described referring to FIG.8.

The order processing in this flowchart illustrated in FIG.8 starts when the customer peruses commodity image displayed within the Web page, then this order processing shifts to step S20.

In step S20, the customer selects a commodity of purchasing through the input device 35 referring to the commodity images within the Web page, and puts the commodity of purchasing into a shopping cart. Accordingly, processing of step S20 is completed, then the order processing shifts to step S21.

Here, the shopping cart is a data file which is generally used at normal online shopping malls, and stores therein commodity name or commodity number of purchasing. Displaying the contents of the data fail to the customer makes it possible for the customer is to check the commodities that the customer has selected.

In step S21, the customer determines whether there is another commodity to purchase, and when there is another commodity to purchase, this order processing returns from step S21 to step S20 again. On the other hand, when there is no another commodity to purchase and the customer purchases the commodity within the shopping cart at present, this order processing shifts from step S21 to step S22.

In step S22, the store apparatus 1 transmits shopping provisions information to the customer apparatus 2 in order to confirm whether the customer agrees to the shopping provisions. The customer judges whether the customer him or herself agrees to the shopping provisions referring to the shopping provisions information, and when the customer does not agree to the shopping provisions, the customer clicks on the "disagreement" button within the Web page. After that, the order processing shifts from step S22 to step S23.

In the processing of step S23, the store apparatus 1 prohibits marketing processing of the commodity selected by the customer and then one series of order processing and commodity purchase processing ends.

On the other hand, when the customer agrees to the shopping provisions, the customer clicks on the "agreement" button within the Web page. After that, this order processing shifts from step S22 to step S24.

In step S24, the store apparatus 1 generates an order confirmation image based on the contents of commodity selected by the customer and then transmits the order confirmation image to the customer apparatus 2 by controlling the communication device 33. The customer apparatus 2 displays the order confirmation image on the display device 34, then the customer checks whether there is an error in his or her order contents by referring to the order confirmation image. Further, when there is an error in the order contents, the customer clicks on the "correction" button provided within the order confirmation image to correct the order contents. On the other hand, when order contents are correct, this purchase processing shifts from step S24 to step S25.

In step S25, the customer judges whether he or she uses points acquired until now on this occasion of purchase of the commodities. And then, when the user uses the points, this order processing shifts from step S25 to step S26.

Here, the store apparatus 1 extracts the number of points acquired by the customer from the customer database 23 so that the customer can check the points which the customer has acquired until now, and then displays the extracted number of points on the order confirmation image.

In step S26, the customer inputs the number of points to use for the sake of purchase of the commodity in the predetermined position within the order confirmation image by operating the input device 35 involved in the customer apparatus 2. When the customer inputs the number of points, the customer apparatus 2 transmits the number of points input by the customer to the store apparatus 1 by controlling the communication device 33. The store apparatus 1, when receiving the number of point inputted, calculates an amount of money in such a way as to discount the number of points which is utilized this time from the purchase amount this time, and then the store apparatus 1 transmits the calculated amount of money to the customer apparatus 2. After that, this order processing shifts from step S26 to step S27.

Here, in this embodiment, as described above, it is supposed that the point is capable of being utilized in commodity purchase every unit of 10 points by converting 1 point into 1 yen.

On the other hand, when the customer does not use acquired points on the occasion of purchase of commodity or the customer does not have points, this order processing immediately shifts from step S25 to step S27.

In step S27, the customer checks the order contents referring to the order confirmation image and then clicks on an "OK" button provided within the order confirmation image. When the "OK" button is clicked on, the customer apparatus 2 transmits order data to the store apparatus 1 by controlling the communication device 33. This completes a series of order processing and the commodity purchase processing shifts to step S5 illustrated in FIG.6, which is the main routine.

In step S5, the store apparatus 1 ships the commodity ordered by the customer to the delivery address of the commodity of the customer, which is stored in the customer database 23, in accordance with the order data transmitted from the customer apparatus 2. Further, after predetermined time period, the store apparatus 1 transmits an electronic mail describing URL for determining the number of points of the customer on purchase of the commodity to an electronic mail address of the customer. After that, this commodity purchase processing shifts from step S5 to step S6.

Here, in the embodiment, point is determined by the customer after predetermined period of time from the shipment of the commodity so that the customer does not cancel purchase of the commodity after finding out the number of points determined by use of roulette described later, however, when there is no such problem, for example, the commodity can be shipped after determining the point given to the customer by the use of the roulette described later, or the electronic mail of describing URL of determining the number of the point can be transmitted simultaneously with the shipment of the commodity.

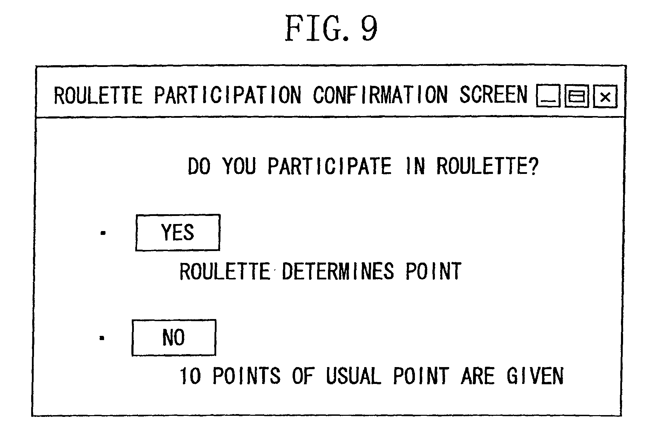

In step S6, the customer accesses the URL for determining the number of point by operating the customer apparatus 2. When being accessed from the customer, the store apparatus 1 outputs roulette participation confirmation image as illustrated in FIG.9 on the display device 34 of the customer apparatus 2, and then confirms whether the customer determines the number of point by the use of the roulette. Further, when determining the number of point by the use of the roulette, the customer clicks on a "yes" button provided within the roulette participation confirmation image. After this processing, this commodity purchase processing shifts from step S6 to step S7.

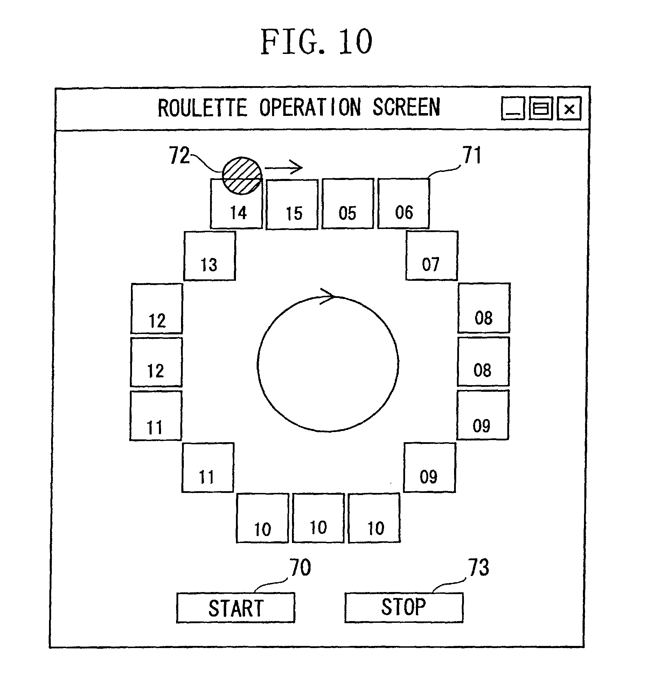

In step S7, the store apparatus 1 outputs an roulette operation image as illustrated in FIG.10 on the display device 34 involved in the customer apparatus 2. The roulette operation image in this embodiment consists of a roulette 71 on which the numbers of point of being given to the customer are displayed, and ball 72 for determining the number of point of being given to the customer.

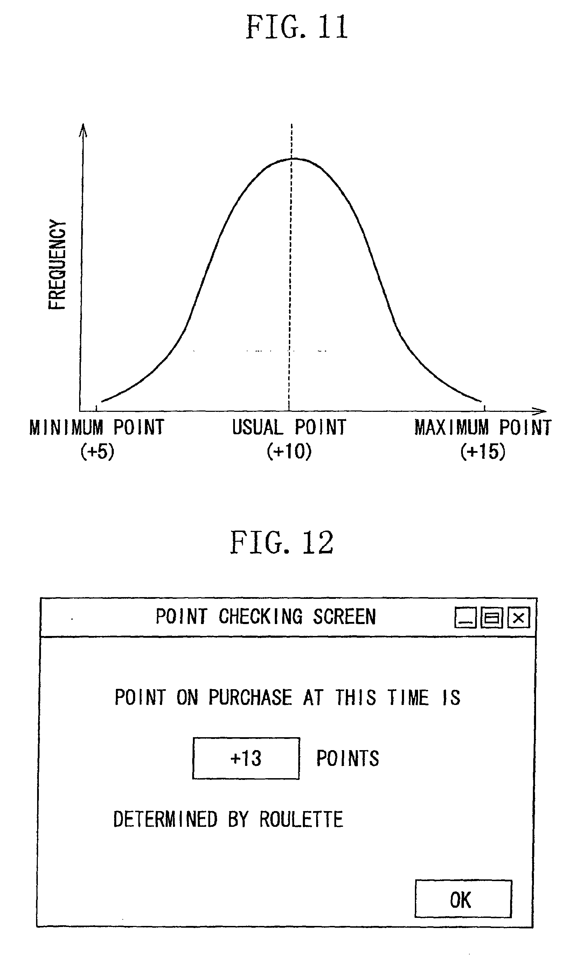

Here, it is appropriate that the numbers of point displayed on the roulette 71, for example, as illustrated in FIG.11, may be determined in accordance with normal distribution formula in which points (10 points in the case of the example) usually given based on amount of commodity purchase is taken to be average value. According to such constitution, an average value of acquired points of all customers can be an usual number of point, so that the store side does not sustain a great deal of loss. On the other hand, since the customer can acquire higher points than the usual number of point, customer's willingness for purchasing commodity can be further urged.

It should be noted that the number of point given to the customer can be determined in accordance with, for example, a complete probability in which the all number of points from the minimum point (5 points) to the maximum point (15 points) appear under the same probability without using the normal distribution formula. According to this constitution, since the number of point given to the customer is completely governed by probability, it becomes possible to keep the customer's willingness for purchasing commodity and to direct the customer's willingness for purchasing commodity to the whole commodities without being limited to specific time period or specific commodities. In addition, since the customer can acquire higher point than the point given usually, depending on a result of the roulette, it is possible to further rouse willingness for purchasing commodity of the customer who tries to participate in the roulette. Further, pleasure for determining the number of point is prepared, therefore, the customer is capable of shopping with more fun.

When the roulette operation image is output, the customer clicks on a "start" button within the roulette operation image to instruct rotation of the roulette 71 and the ball 72. The store apparatus 1, when the customer pushes the "start" button, outputs an image in which the roulette 71 and the ball 72 are rotated on the display device 34 of the customer apparatus 2.

When the rotation of the roulette 71 and the ball 72 is started, the customer instructs to stop the rotation of the roulette 71 and the ball 72 by pushing a "stop" button 73 within the roulette operation image at the appropriate timing. The store apparatus 1 outputs an image after the customer pushes the "stop" button, in which the rotation speed of the roulette 71 and the ball 72 decreases gradually and then the roulette 71 and the ball 72 ultimately stop, on the display device 34 of the customer apparatus 2.

The store apparatus 1 determines a number of a place of the roulette 71 at which the ball 72 stopped as the number of point to be given to the customer. After that, this commodity purchase processing shifts from step S7 to step S8.

In step S8, the store apparatus 1 outputs a point checking image as illustrated in FIG.12 on the display device 34 of the customer apparatus 2 to notify the number of point determined by the use of the roulette to the customer. Further, the store apparatus 1 gives the number of point determined by the use of the roulette to the customer. Then this commodity purchase processing shifts from step S8 to step S10.

On the other hand, when the customer does not participate in the roulette of determining the number of point of the customer on the commodity purchase, the customer clicks on a "no" button provided within the roulette participation confirmation image. Then this commodity purchase processing shifts from step S6 to step S9.

In step S9, the store apparatus 1 gives the number of point (usual point) depending on amount of commodity purchase of the customer to the customer referring to the order data transmitted from the customer apparatus 2. Then this commodity purchase processing shifts from step S9 to step S10.

In step 10, the store apparatus 1 updates the acquired number of point of the customer that are stored in the customer database 23 based on the number of point given to the customer in the above-described processing of step S8 or step S9. This completes a series of commodity purchase processing.

As is clear from above explanation, according to the network marketing system of the embodiment, since point value given to the customer by purchasing commodity is determined by a number indicated by the roulette irrespective of amount of money of commodity purchase, specific time period and specific commodity, it becomes possible to keep willingness for purchasing commodity of the customer and to direct willingness for purchasing commodity of the customer to all commodities.

In addition, according to the network marketing system of the embodiment, since the customer can acquire a higher point than the point given usually, depending on a result of the roulette, it is possible to further rouse willingness for purchasing commodity of the customer who tries to participate in roulette. Further, pleasure for determining the number of point is prepared for the customer, therefore, the customer is capable of doing shopping with more fun.

### Other Embodiments

The invention achieved by the present inventors was described according to the embodiment in the above, however, a statement and drawings to be a part of the disclosure must not be understood as ones that limits the invention. Namely, according to the disclosure, skills in the art can find various substitute embodiments, examples and working technologies.

For example, in the above-described embodiment, a point value to be given to the customer is determined by the use of the roulette form, however, it is possible that the point value to be given to the customer is determined by the use of a raffle form, bingo form, drawing lots form and so forth. In addition, the above-described embodiment describes a point giving processing in the virtual store on the Internet, however, the embodiment is applicable to an actual store.

It should be noted that point service processing of the embodiment can be stored in a computer readable recording medium after the programmed. Then, on the execution of the point service processing, the recording medium is read by a computer system so that a storage section such as memory and so forth in the computer system stores therein the program, and then the operation device executes the point service program, thereby realizing the point service according to the embodiment of the present invention.

Here, the recording medium includes a computer readable recording medium and so forth, such as, for example, semiconductor memory, magnetic disk, optical disk, magnetic optical disk, magnetic tape and so forth that are capable of recording programs.

### INDUSTRIAL APLICABILITY

The present invention can be applied to network marketing systems by which customers can buy commodities on Internet.

## Claims

1. A point service system comprising:
receiving means for receiving an input from the user with respect to user's intention of purchasing a commodity or service; and
first determining means for determining a numeral value corresponding to the commodity or service,
wherein the numeral value fluctuates stochastically.

2. The point service system according to claim 1, wherein the first determining means determines the numeral value within a predetermined range of numeral values.

3. The point service system according to claim 1 or 2, wherein the first determining means determines the numeral value in accordance with a normal distribution formula.

4. The point service system according to claim 2, wherein the first determining means determines the numeral value so that a probability of determining one numeral value from the predetermined range of numeral values becomes equivalent on each numeral value.

5. The point service system according to claim 2, wherein the first determining means determines the numeral value so that a probability of determining one numeral value from the predetermined range of numeral values is based on a predetermined distribution rules.

6. The point service system according to any one of claims 1 to 5, further comprising:
notifying means for notifying the numeral values to the user who purchases the commodity or service.

7. The point service system according to any one of claim 1 to 6, further comprising:
controlling means for executing numeral value determination by controlling the first determining means for the cases where there is a numeral value determination request from the user.

8. The point service system according to claim 7, further comprising:
prompting means for prompting to input the numeral value determination request to the user.

9. The point service system according to claim 8, wherein the prompting means prompts to input the numeral value determination request to the user by transmitting an electronic mail to the user.

10. The point service system according to any one of claim 1 to 9, further comprising:
second determining means for determining the numeral value corresponding to the commodity or service into a previously fixed numeral value.

11. The point service system according to claim 10, further comprising:
switching means for switching to control the first and second determining means.

12. A method of point service comprising the steps of:
inputting control information for determining a point value exchangeable for a predetermined commodity or service to the customer who has purchased commodities or services; and
determining the point value in accordance with the input control information and then giving the determined point value to the customer.

13. The method of point service according to claim 12, further comprising the step of:
fluctuating the point value that is given to the customer with a predetermined probability.

14. The method of point service according to claim 13, further comprising the step of:
giving the point value corresponding to the amount of the commodity or service purchased by the customer, when the customer does not desire the fluctuation of the point value.

15. The method of point service according to claim 12 or 13, further comprising the step of:
determining the point value that is given to the customer in accordance with a normal distribution formula in which the point value corresponding to the amount of the commodity or service purchased by the customer is taken to be an average value.

16. The method of point service according to claim 12 or 13, further comprising the step of:
selecting the point value with equiprobability from a predetermined range of point values, and giving the selected point value to the customer.

17. The method of point service according to any one of claim 12 to 16, wherein the point value that is given to the customer is determined after predetermined time period from a time point of when the customer purchased the commodity or service.

18. A point service program to be executed on a computer, comprising:
a step for receiving an input of control information to determine a point value exchangeable for a predetermined commodity or service which is given to a customer who has purchased a commodity or service; and
a step for determining the point value in accordance with the input control information and then giving the determined point value to the customer.

19. A computer-readable recording medium having recorded therein point service program to be executed on a computer, wherein the point service program comprising:
a step for receiving an input of control information to determine a point value exchangeable for a predetermined commodity or service which is given to a customer who has purchased a commodity or service; and
a step for determining the point value in accordance with the input control information and then giving the determined point value to the customer.
